# EUROPEAN PATENT SPECIFICATION

(11) **EP 3 384 585 B1**
(45) Date of publication and mention of the grant of the patent: **21.04.2021**
(21) Application number: 16870030.0
(22) Date of filing: 01.12.2016
(51) Int. Cl.: H02K 55/04, F03D 80/80, H02K 9/00, H02K 9/19, H02K 19/16, H02K 7/18, H02K 1/02, F03D 9/25

(54) **SYNCHRONOUS SUPERCONDUCTIVE ROTARY MACHINE HAVING A CONSECUTIVE POLE ARRANGEMENT**
SYNCHRONE SUPRALEITENDE DREHMASCHINE MIT EINER AUFEINANDERFOLGENDEN PFOSTENANORDNUNG
MACHINE TOURNANTE SUPRACONDUCTRICE SYNCHRONE À AGENCEMENT DE PÔLES CONSÉCUTIFS

(30) Priority: 03.12.2015 DK 201570799
(43) Date of publication of application: 10.10.2018
(73) Proprietor: Envision Energy (Denmark) ApS, 8600 Silkeborg (DK); Eco 5 GmbH, 53111 Bonn (DE)
(72) Inventor: BÜHRER, Carsten, 53125 Bonn (DE); KELLERS, Jürgen, 45721 Haltern am See (DE); WIEZORECK, Jan, 53115 Bonn (DE)
(74) Representative: Patrade A/S
(86) International application number: PCT/DK2016/050406
(87) International publication number: WO 2017/092768

(56) References cited:
- WO-A1-2015/084790
- CN-A- 103 501 104
- DE-A1-102011 005 217
- GB-A- 2 514 295
- US-A1- 2008 197 633
- US-A1- 2013 261 000
- US-B2- 7 834 510

## Description

### Field of the Invention

The present invention relates to a synchronous superconductive rotary machine comprising a rotor arranged rotatably relative to a stator, wherein the rotor comprises at least a back iron and a plurality of first pole units arranged on the back iron, wherein at least one second pole unit is arranged in a gap formed between two adjacent first pole units, the at least one second pole unit comprises at least one superconductive rotor coil, wherein the at least one rotor coil is configured to interact with at least one stator coil arranged in the stator via an electromagnetic field when the rotor is rotated relative to the stator.

### Background of the Invention

So-called direct drive mechanisms have, in the recent years, been used for numerous applications, such as motors for driving electrical machines, vehicles, trains or vessels, and as generators for producing power in the field of wind power or in other power generating fields, such as hydro power. These machines are mostly synchronously excited rotating machines, mostly with a large number of pole units distributed on the rotor. The advantage of such rotary machines lies in a high torque at a relatively low speed and good control. In most motors, the excitation element is the rotor which is synchronously moved through a traveling magnetic field generated by the windings in the stator. In most generators, the excitation element is the rotor which generates an electrical current in the windings in the stator and, thus, produces an electrical power output when it is rotated relative to the stator. These functions can also be reversed such that the armature (stator) is moved and the excitation element (rotor) stands still.

Such a rotor can be excited using permanent magnets or a set of electrical coils through which an electric current can be conducted. In most stator-rotor arrangements, a plurality of pole units are distributed along an inner or outer surface of the excitation element, e.g. on a back iron made of a magnetic material. Each pole unit may comprise electrically conductive coils wound onto a non-magnetic carrier, i.e. an air-gap winding, or include a core element of a magnetic material that is surrounded by the electrically conductive coils. The magnetic material is, in this context, typically a ferromagnetic material. A direct current flow is conducted through these rotor coils such that the direction of the magnetic field between two adjacent pole units is opposite, i.e. the first one becomes a north pole and the next one becomes a south pole. This behaviour can be achieved by arranging the windings of the rotor coils of the adjacent pole units in opposite directions. Alternatively, an identical effect can be achieved if the direction of these windings is the same and the direction of the current flow in the rotor coils of the adjacent pole unit is reversed.

The total number of pole units of a rotor is typically an even number, and thereby adjacent pole units can be arranged in pairs. The individual pole units can be arranged in a consequent pole arrangement wherein the electrical coils of each pole unit have a concordant direction of current flow. The current flow in these electrical coils must be increased or the number of windings of an individual coil must be at least doubled in order to achieve similar outputs. In this way, the flux density is kept the same or almost the same compared to a more common pole arrangement in which each individual pole unit has a set of electrical coils. Copper or aluminium is typically used as electrically conductive material for these coils.

Superconductors are also used in such rotary machines. Superconducting rotary machines can be made significantly more compact and in a manner that requires less resources. However, such superconductive coils must be operated at an operating temperature below their critical temperature, e.g. at cryogenic operating temperature of 50 K, 30 K, or even lower.

US 2008/0197633 A1 describes a rotary machine in which the superconductive coils are located in a cryostat, and a coolant, e.g. liquid helium, flows around the coils for cooling the coils to their cryogenic operating temperature. An additional vacuum container is provided for heat insulation, optionally with other containers or thermal shields which contain another coolant, such as liquid nitrogen. This solution has a complex design consisting of multiple containers and which in turn increases the manufacturing costs.

EP 2521252 B1 describes an arrangement in which a magnetic back iron is provided with individual projecting magnetic pole units. Each individual pole unit is encompassed by a set of superconductive coils which in turn is arranged inside a cryostat. In this design, the superconductive coils are operated at a cryogenic operating temperature while the magnetic materials located outside the cryostats are operated at an ambient temperature. Furthermore, each individual superconductive coil must be supported against the walls of the cryostat. This configuration indicates that the forces acting on the cryostat walls are transmitted to the adjacent pole units, and thus reinforcement of the individual cryostats is required in order to prevent these from failing. This, in turn, provides a highly complex and, thus, expensive design.

WO 2012/031621 A1 describes a rotor where each individual pole unit has superconductive rotor coils. A cryostat that can hold a coolant is arranged around each set of rotor coils. Each individual cryostat is located in a vacuum container for thermal insulation. Each individual rotor coil is driven by a separate power supply such that it can be switched off in the event of a defect. However, switching off one or more rotor coils will reduce the power output. In this complex design, the electrical current for each individual rotor coil has to be conducted from an ambient temperature through the vacuum container and further through the cryostat. This considerably increases the required cooling capacity of the cooling system. The cooling capacity, P, is thus calculated based on the electrical current in accordance with P = I²·R, wherein I is the operating current and R is substantially the resistance of the power supply lines. In a superconductive machine, this can make up 25% or more of the overall rotor losses which in turn increase by a factor equal to the total number of pole units. These rotor losses are economically unreasonable in rotary machines, such as direct drive wind turbines, with a high number of pole units, e.g. 32 or 48 or more.

DE 102011005217 A1 describes a rotor of a synchronous rotary machine in which the complete magnetic back iron with projecting magnetic pole units is encompassed by a cryostat and kept at the cryogenic operating temperature of the superconducting coils. The individual pole units are arranged in a consecutive pole arrangement wherein only every second pole unit comprises a superconductive coil. This design has a very large thermal mass and requires high cooling capacity for cooling down or, accordingly, long waiting times, since the entire thermal mass must be cooled down to the operating temperature of the superconductor. This is a great disadvantage in the event of commissioning, maintenance or repair operations because it significantly increases the downtime of the rotary machine. In addition, the entire torque that acts on the magnetic portion of the rotor must be transmitted from a cryogenic operating temperature to an ambient temperature which in turn reduces the efficiency of the rotary machine. WO 2015/084790 A1 discloses a rotary machine with a segmented rotor and a stator, wherein the rotor comprises a back iron on which a plurality of pole units arranged either in a consecutive pole setup or in a continuous pole setup. Every second pole units or all pole units comprise superconductive coils enclosed in a racetrack shaped cryostat arranged around a warm core element projecting directly from the back iron towards the stator. The superconductive coils are operated at cryogenic temperatures while the rest of the rotor is operated at ambient temperatures. This solution requires a double walled cryostat in order to provide sufficient thermal insulation, wherein the superconductive coils are submerged in a coolant inside an innermost chamber of the cryostat. The superconductive coils must be connected to a holding structure located within this innermost chamber in order to allow forces to be transferred through the walls and further into the warm core element. This rotor design has a large heat transferring contact surface between the outer walls of the cryostat and the warm core element and back iron, thus additional cooling capacity is required in order to keep the superconductive coils at desired cryogenic operating temperatures.

GB 2514295 A discloses a rotary machine where the superconductive rotor coils are arranged on the outer surface of the back iron, which is further connected to the rotor shaft. The superconductive rotor coils and the back iron are arranged in a vacuum chamber and operated at cryogenic operating temperature. GB 2514295 A does not describe in details how the stator assembly is configured.

US 2013/0261000 A1 discloses a rotary machine comprising a rotor back iron connected to the rotor shaft, where a plurality of superconductive rotor coil units are arranged side-by-side on the outer side of the rotor back iron. Superconductive rotor coils are wound around a core element where both the rotor coils and the core element are connected to a support tube. The rotor coils, core element and the support tube are encapsulated in a housing, which forms a cryostat that is cooled to a cryogenic operating temperature via a cooling system thermally coupled to the support tube. The rotor back iron provides support for the cryostat and is thermally insulated from the cryostat. The stator assembly comprises a stator back iron connected to an enclosing housing, where the stator coils are embedded in the stator back iron and interact with the superconductive rotor coils during operation.

US 7834510 2 discloses a rotary machine with a similar stator assembly and a rotor assembly with a different cryostat configuration. Here, the core element is connected to the rotor back iron via a plurality of thermally insulating support structures. Each support structure comprises a support block attached to the core element. The support block is suspended within the support frame via thermally insulating straps so that a gap is formed between the support frame and the support block. Further, the support block projects outwards of the support frame so that a vacuum gap is formed between the rotor back iron and the support tube.

CN 103501104 A discloses a motor comprising a stator assembly with the stator coils embedded in a stator back iron. The motor further comprises a rotor assembly with a housing forming an evacuated chamber in which a rotor back iron supporting the superconductive rotor coils are arranged. The rotor back iron is connected to the housing via thermally insulating support rods. The rotor back iron comprises core elements and fingers both projecting from its outer surface. The superconductive coils are wound around each core element and fill up the entire space between the core element and the adjacent fingers. The entire rotor back iron along with the superconductive rotor coils are cooled to a cryogenic operating temperature.

### Object of the Invention

An object of this invention is to provide a superconducting synchronous electrical machine that solves the above-mentioned problems.

An object of this invention is to provide a superconducting synchronous electrical machine which can be manufactured more effectively and, thus, reduces the manufacturing costs.

### Description of the Invention

An object of the invention is achieved by a synchronous superconductive rotary machine defined by independent claim 1 and comprising:
- a rotor arranged rotatably relative to a stator, wherein
- the rotor comprises at least a back iron configured to be connected to a drive shaft via a rotor structure, the rotor further comprises a plurality of first pole units arranged on the back iron, the first pole units extend in at least a radial direction relative to the back iron, wherein a magnetic air gap is formed in circumferential direction between a circumferential side surface of one of said first pole units and a corresponding opposite circumferential side surface of an adjacent first pole unit in which at least one second pole unit is arranged, wherein the at least one second pole unit comprises at least one superconductive rotor coil, the at least one rotor coil is configured to interact with at least one stator coil arranged in the stator via an electromagnetic field when the rotor is rotated relative to the stator, wherein the first pole units and the at least one second pole unit are arranged inside an evacuated chamber defined by a housing, wherein the first pole units and the back iron are configured to be operated at an ambient temperature, and wherein the at least one second pole unit is configured to be operated at a cryogenic temperature, wherein the at least one second pole unit is spaced apart from the back iron by means of at least one thermally insulating support element extended in radial direction of the rotor and arranged at respective components of the rotor and the rotor structure so a first magnetic air gap is formed between the at least one second pole unit and the back iron and at least a second magnetic air gap is formed between the at least one second pole unit and at least one front wall of the housing of the evacuated chamber, wherein a radially outer end of the at least one thermally insulating support element is mounted to a thermal shield of the second pole unit and a radially inner end of the at least one thermally insulating support element is mounted to the rotor structure between the black iron and the drive shaft.

The dependent claims are related to optional features of the synchronous superconductive rotary machine. The above mentioned configuration provides a compact and light weight superconductive rotary machine that takes up less space and saves materials and weight compared to conventional copper based rotary machines. This rotary machine also provides an increased current density compared to conventional rotary machines as the rotor coils and/or the stator coils are operated below their critical temperature. This compact design further allows for a fast assembly process of the rotor as the superconductive pole units, i.e. at least the second pole units, may be manufactured separately and then mounted to the rest of the rotor in a simple and easy manner. These superconductive pole modules may be mounted using a thermally insulating support structure or elements.

The drive shaft, rotor structure, back iron, and first pole units act as components of the warm side of the rotary machine while the second pole units act as components of the cold side of the rotary machine. This reduces the total mass which needs to be cooled down to a minimum, and which in turn reduces the required cooling capacity of the cooling system unlike the design of DE 102011005217 A1 which requires that the entire rotor assembly is cooled down to the cryogenic operating temperature.

The rotor may be arranged inside the stator, or vice versa, wherein the stator and rotor are spaced apart by means of a gap so that the rotor is able to rotate relative to the stator. This physical gap at ambient pressure is part of the magnetic air gap of the rotary machine. This gap may in example be between 5 mm and 40 mm. The stator and rotor may have a substantially circular cross-sectional profile when seen in the axial direction.

The term "cryogenic operating temperature" is defined as an operating temperature which is lower than the critical temperature of the superconductive material of the respective coil. The term "ambient temperature" is defined as the temperature of the surrounding environment which is higher than the cryogenic operating temperature.

According to one example, the first pole units are shaped as magnetic pole elements projecting from an outer surface of the back iron, wherein said magnetic pole elements have a radial height which at least corresponds to the thickness of the at least one second pole unit.

The first pole units are preferably shaped as projecting pole elements each having a free end which extends towards the stator. These pole elements may form part of the back iron or be mounted to the back iron via a mechanical coupling, e.g. a track element (e.g. a dovetail or finger) and a corresponding groove shaped to receive the track element, or fastening means, e.g. bolts, or another suitable mounting technique. The first pole elements each have a predetermined radial height, axial length, and a lateral width. Said axial length is measured in a direction parallel to a longitudinal direction of the rotor while the lateral width is measured in a direction perpendicular to the longitudinal and radial directions. The first pole elements form a number of physical gaps or spaces in which the second pole units are positioned. This configuration reduces the number of power transmission elements, i.e. pole units having electrically conductive coils, as the first pole units do not comprise any rotor coils which in turn reduce the required installation space and the total assembly time. The rotor may comprise any number of first and second pole units, in example between 15 and 30 first pole units and between 15 and 30 second pole units, thus in total between 30 to 60 pole units. This also allows the magnetic forces acting on the rotor coils, e.g. the superconductive coils, to be absorbed in a mechanically stable manner in the cold side and then transmitted to the warm side via one or more thermally insulating support elements. The magnetic forces acting on the first and second pole units are then absorbed in the warm rotor structure which in turn allows for a more cost-effective design compared to the design of the conventional rotary machines.

The back iron may be connected to one end of a rotor structure which at the other end may be connected to a drive shaft. Alternatively, the back iron may form part of or be encompassed by the rotor structure so they form a single unit. The rotor structure may be configured to transfer torque and forces from the back iron to the drive shaft. The back iron may be made of a solid material or a laminate which is bonded together so that it forms an air-tight rear wall of the evaluated chamber. The first pole units and/or the back iron may be made of a magnetic material, such as iron (e.g. pure iron), magnetic or electrical steel, high-carbon steel, nickel-containing steel, steels with a low carbon content (e.g. of the ARMCO® trade name), or another suitable material. The rotor structure may be made of a material with strong structural properties, such as any type of steel, fibre reinforced plastics (e.g. GFRP), or another suitable material. The thickness, in the radial direction, of the back iron may be selected based on specific magnetic requirements, and thus it can be manufactured more cost-effective. In example, the back iron may have any suitable thickness, such as up to 120 mm or between 30 mm and 70 mm, preferably between 40 mm and 60 mm, e.g. 50 mm.

According to one example, the at least one front wall is facing the stator and the housing further comprises at least one end wall connected to the at least one front wall, wherein the at least one end wall is further connected to at least one of back iron and the rotor structure.

According to the invention the first and second pole units are positioned inside an enclosed chamber which is evacuated by using an internal or external vacuum system, e.g. a vacuum pump The internal vacuum system may be integrated into the rotary machine, e.g. arranged on the rotor structure. One or more connecting or release valves may be mounted in the housing, the rotor structure and/or the back iron for allowing the enclosed chamber to be evacuated. The pressure inside the enclosed chamber may be reduced to 1 microbar or lower, preferably to 0,1 microbar or lower, so that it substantially forms a vacuum chamber. The housing, the back iron and, optionally, the rotor structure also act as a cryostat for the superconductive pole units. However, unlike the conventional rotary machines, the present configuration of the invention formsa common cryostat in which all the superconductive pole units are positioned. Furthermore, the present cryostat is not filled with a coolant in order to cool down the superconductive coils. Instead, the vacuum chamber acts as a thermal insulation chamber for preventing heat transfer by gas convection between the surrounding warm components and the cold components.

The housing may comprise one or more front walls facing the stator and one or more end walls located at the respective ends of the rotor. The end walls may be connected to the front walls by means of an air-tight seal, e.g. welding, a metallic seal, a polymer seal, or another suitable seal. The end walls may further be connected to the rotor structure or the back iron by means of another air-tight seal. The front wall, end walls, rotor structure and back iron may be mounted together by means of screws, bolts, welding, or another suitable mounting technique. The front wall and/or the end walls may in example have a thickness of 15 mm or less, preferably 10 mm or less. This allows the chamber of the cryostat to be closed off and then evacuated so that it acts as a vacuum chamber. The front wall and/or end walls may be made of a non-magnetic material to prevent short circuiting of the magnetic fields of the rotor, such as stainless steel, fibre reinforced plastic (e.g. GFRP), carbon fibre composite (e.g. CFC), copper, aluminium, alloy containing at least copper or aluminium, or another suitable material. Said fibres may be organic fibres, glass fibres, or other suitable fibres. Alternatively, the end walls may be made of a magnetic material, such as iron (e.g. pure iron), magnetic or electrical steel, high-carbon steel, nickel-containing steel, steels with a low carbon content, e.g. of the ARMCO® trade name, or another suitable material.

A shielding layer may be applied to the housing, e.g. the front wall and/or end walls, to dampen the alternating currents induced into the rotor. The shielding layer may also be used to ensure the synchronicity of the rotary machine. This shielding layer may be applied to the outside and/or inside of the housing and may consist of a material with good electrical conductivity, such as copper or aluminium or an alloy containing at least copper or aluminium. The shielding layer may, in example, have a thickness of 2 mm to 10 mm, preferably 2 mm to 5 mm, e.g. 3 mm. Alternatively, or additionally, one or more reinforcing struts may be mounted to the outside and/or inside of the housing for providing added support.

The front wall may be spaced apart from an outer surface located on the free ends of the first pole units so that the gaps, in which the second pole units are located, form a continuous spacing in the lateral direction. Alternatively, the front wall may contact each outer surface and optionally be mounted to the free ends by means of a mechanical coupling, e.g. a track element (e.g. a dovetail) and a corresponding groove for receiving the track element, or fastening means, e.g. bolts or screws. The gaps then form individual spaces in the lateral direction in which the second pole units are located.

According to the invention, the at least one second pole unit comprises at least one thermal shield which surrounds in one example the respective second pole unit, wherein the at least one thermal shield is actively cooled by means of a first cooling system.

The second pole units each may have a thermal shield which may cover any exterior surfaces or at least the large exterior surfaces of the respective second pole unit, i.e. the outer surface, inner surface, side surfaces, and optionally end surfaces. This actively cooled thermal shield may comprise one or more first cooling channels, or at least one first cooling element, e.g. a strip or layer, with good thermal conductive properties, such as copper, aluminium, silver, magnesium, alloys containing at least copper or aluminium, or another suitable material or alloy. The thermal shield may further comprise at least one thermal insulating layer or laminate with good insulating properties, such as a heat insulating film or another suitable insulating material. This allows the critical components to be wrapped in a thermal shield for further reducing the heat transfer between the cold side and the warm side.

A first cooling system may be connected to the thermal shield via a pipe or hose system configured to circulate a first coolant or a first set of thermal conductive elements, e.g. metal rods or wires, configured to conduct heat away from the thermal shield. The first cooling system may be configured to actively cool down the thermal shield to an intermediate operating temperature. The first cooling system may comprise a first pumping unit and one or more first cooling units, e.g. heat exchangers, for removing heat from the first coolant. The first coolant may be circulated inside the first cooling channels located within or positioned relative to the thermal shield. Alternatively, the first pumping unit may be omitted and the first cooling units may be cold heads for removing heat from the first set of thermal conductive elements. The intermediate operating temperature may be higher than the cryogenic operating temperature and lower than the ambient temperature. In example, this intermediate operating temperature may be between 10 K and 60 K greater than the selected cryogenic operating temperature.

According to a further example, the first cooling system is connected to the at least one thermal shield by means of a set of heat transferring elements configured to remove heat from the at least one thermal shield, wherein at least one of the heat transferring elements is further connected to said at least one thermally insulating support element via another heat transferring element.

The first cooling system may further comprise at least one first compressor unit in fluid communication with the first cooling units, e.g. cold heads, via a separate pipe or hose system. The first compressor unit may be configured to circulate a first working fluid through the first cooling units via a first line and a second line defined by this separate pipe or hose system. The first working fluid may in example be a suitable gas or liquid, such as helium or nitrogen. The first working fluid may be fed into the first cooling units via the first line, e.g. at or above an ambient temperature, and fed back to the first compressor unit via the second line. The pressure of the first working fluid in the first line may in example be between 10 bar and 25 bar. A controller may be connected to the individual components of the first cooling system via electrical cables for controlling the operation of the first cooling system.

The pipe or hose system or first set of thermal conductive elements located between the first cooling system and the thermal shield may act as heat transferring elements for removing heat from the thermal shield. Optionally, another heat transferring element, e.g. a thermal conductive element, may at one end be connected to a selected pipe or hose line or thermal conductive element. This heat transferring element may, at the other end, be connected to a connection point located on a selected thermally insulating support element. This allows any introduced heat into the support elements to be dissipated into the first cooling system via the selected pipe, or the hose line, or the thermal conductive element.

According to another example, the at least one second pole unit comprises at least one thermal shield surrounding the respective second pole unit, wherein the at least one thermal shield is a passive thermal shield comprising at least one heat insulating layer.

In this configuration, the thermal shield may be a thermal insulating laminate with good insulating properties. This thermal insulating laminate may comprise two or more layers made out of a commercially available superinsulation material, preferably two or three sheets of this prefabricated material. Such a superinsulation material is made of at least one layer of polyethylene, polyester, or another suitable support material covered with a reflective material, e.g. aluminium or gold, acting as a mirror against thermal radiation. The sheets of such mirror foils may be separated by nets of glass fibre, typically ten alternating layers pre-packaged. This allows the thermal shield to act as a passive thermal barrier between the warm components and the cold components.

The active or passive thermal shield may be spaced apart from the superconductive coil arrangement, and optionally the winding core element thereof, by a few millimetres. This spacing may in example be 5 mm or less, preferably 3 mm or less.

According to one example, the superconductive coils are made of a high temperature superconductive material and configured to be operated at a cryogenic operating temperature of no more than 70 K.

A second cooling system may be configured to cool the superconductive coils to a cryogenic operating temperature of 70 K or less. In example, the superconductive coils may be operated between 4 K and 10 K or between 10 K and 20 K. The superconductive coils may also be operated between 15 K and 70 K or between 25 K and 35 K. The cryogenic operating temperature may be selected depending on the specific stator-rotor configuration and/or the material of the superconductive coils. This enables the electrical resistance of the superconductive coils to be reduced to substantially zero while increasing the current density in the superconductive coils. In a preferred embodiment, at least the rotor coils are made of a high temperature superconductive (HTS) material, such as MgB₂, rare earth BCO (e.g. YBCO or GdBCO), BSCO, BSCCO, TBCCO, HBCCO, or any other suitable material. This enables the rotary machine to be configured as a partial or fully superconductive machine.

The warm side may be configured to operate at a temperature that follows the ambient temperature of the rotary machine. This ambient temperature may be 250 K or higher, preferably between 250 K and 350 K, e.g. 300 K.

The superconductive arrangement in the second pole units may comprise a plurality of windings arranged in one or more rows and columns. The individual superconductive coils may have a circular, an elliptical, a rectangular, a squared, a race-track, or another suitable shape. The superconductive coils are preferably wrapped around a winding core element, e.g. a solid element, or a laminate made of thick or thin plates, with an optional tension anchor extending in the axial direction. This winding core element may be made of a magnetic material, such as iron (e.g. pure iron), magnetic or electrical steel, high-carbon steel, nickel-containing steel (e.g. FeNi9), steels with a low carbon content (e.g. of the ARMCO® trade name), alloys containing at least iron (e.g. FeSi or FeCo), or another suitable material. This allows the internal magnetic forces occurring in the superconductive coils to be absorbed in the winding core element while reducing the eddy current losses. As both superconductive coils and the winding core elements are operated at substantially the same temperature level, then the cooling capacity of the cooling system can be reduced. Alternatively, a winding core element made of a non-magnetic material may be used, resulting in an air gap concept of the rotary machine.

According to yet another example, the at least one second pole unit further comprises at least:
- at least one spacer element arranged between a core element and the superconductive coils.

The superconductive coil arrangement may optionally be sandwiched between at least two plate shaped elements in the radial direction. The superconductive coil arrangement may further have at least one distance keeping element, i.e. a spacer element, extending around the winding core element. This spacer element may be shaped to follow at least the selected shape of the individual superconductive coils mentioned above. The plate shaped elements and/or spacer elements may be attached to the superconductive coil arrangement by suitable attachment techniques, e.g. bonding, potting, or another suitable technique. The plate shaped elements and/or spacer elements may be made of a non-magnetic material, such as stainless steel, fibre reinforced plastic (e.g. GFRP), carbon fibre composite (e.g. CFC), copper, aluminium, alloy containing at least copper or aluminium, or another suitable material. The use of a spacer element allows the extending field lines from the core element to change direction and, thus, bend away before reaching the superconductive coils. This is particularly suited when using superconductive coils, as some of superconductors used in the superconductive coils have anisotropic properties and their current carrying capacity is limited by the flux lines penetrating the coils perpendicularly to their surface area in the normal direction and to the current flow direction. This allows for a higher operating current. An electrical insulation, e.g. a Kapton foil, may be applied between the superconductive coil arrangement, the spacer elements, and the plate shaped elements.

The second pole units are spaced apart from the outer surface of the back iron so that the heat transferring area between the second pole units and the back iron is reduced to a minimum. This may be done by providing one or more thermally insulating support elements at the respective ends of the rotor. According to the invention the individual support elements are, at a radially outer end, mounted to a thermal shield of the second pole unit, and, at a radially inner end, mounted to the rotor structure between the back iron and the drive shaft. Preferably, the support elements may be connected to one or more mounting points, e.g. a reinforced element, located on the rotor structure so that support elements have an increased length. In example, the support element may have a length between 130 mm and 170 mm, e.g. 150 mm. This allows the forces of the cold second pole unit in various directions to be transferred to the warm rotor structure via these support elements. The material and positions of the support structures may be selected so that forces during normal operation as well as forces in the event of a short circuiting are transferred to the rotor structure while substantially maintaining the second pole units in their respective positions.

In example, at least one support element may extend in the lateral direction and be connected to the second pole unit and an adjacent first pole unit. At least one support element may extend in the radial direction and be connected to the second pole unit and the rotor structure or the back iron. Alternatively, at least one of these support elements may extend in a combined radial and lateral direction and be connected to the rotor structure or the back iron.

According to one example, the at least one thermally insulating support element has a thermal conductivity below 40 W/_{m•K}.

The support element may comprise, at one or both ends, metallic lugs for mounting it to the rotor structure and/or the second pole unit. One or more heat insulating elements may be provided between the respective ends so that they act as a thermal barrier between the warm end and the cold end. The heat insulating elements also provide structural strength to the support elements so that forces, e.g. compression and tension forces, from the second pole units are transferred to the rotor structure. The heat insulating elements may in example have a thermal conductivity below 40 W/_{m•K}, preferably below 10 W/_{m•K} or even below 1 W/_{m•K}. The heat insulating elements may be made of a thermal insulating material, such as fibre reinforced plastic (e.g. GFRP), titanium, or another suitable material. The fibres may be organic fibres, glass fibres, carbon fibres, or other suitable fibres.

The support elements may further comprise adjustable means, e.g. a threated coupling or a row of holes in which a pin may be selectively inserted, for adjusting its longitudinal length measured between its mounting points. Alternatively, the adjustable means, e.g. a deformable ball or spring element, may be used to compensate for the thermal contraction of the support element during normal operation.

According to yet another example, the first magnetic air gap has a radial height of 1 mm to 30 mm and/or the at least second magnetic air gap has a radial height of 15 mm to 50 mm.

Each second pole unit may be spaced apart from the side surfaces of the adjacent first pole units, the outer surface of the back iron, and an inner surface of the front wall of the housing by means of the above-mentioned support elements. The radial height and the lateral width of this spacing are measured between the respective side surface, the outer surface or inner surface, and a corresponding exterior surface of the second pole unit. This divides the gap in which the respective second pole unit is positioned into several spaces, e.g. magnetic air gaps. A first magnetic air gap may be formed between the respective second pole unit and the back iron and may in example have a radial height between 1 mm to 30 mm, preferably between 10 mm and 12 mm. A second magnetic air gap may be formed between the respective second pole unit and the front wall of the housing and may in example have a radial height between 15 mm to 50 mm, preferably between 20 mm and 30 mm, e.g. 25 mm. A third gap or spacing may be formed between the respective second pole unit and either one of the adjacent first pole units and may in example have a lateral width between 1 mm to 50 mm, preferably larger than 5 mm.

According to one example, the at least one second pole unit is further connected to a second cooling system configured to cool the superconductive coils to the cryogenic operating temperature.

The second pole units may comprise one or more inlets and outlets in fluid communication with one or more second cooling channels arranged relative to the superconductive coils. The inlets and outlets may further be in fluid communication with the second cooling system via a pipe or hose system configured to circulate a second coolant. The second cooling system may comprise a second pumping unit and one or more second cooling units, e.g. heat exchangers, for removing heat from the circulated second coolant. The first and/or second coolant may be helium, nitrogen, or other suitable coolants. The circulated first and/or second coolant may be in a gaseous and/or liquid state. Alternatively, one or more thermal conductive elements, e.g. metal wires, plates or rods, may be arranged relative to the superconductive coils and act as second cooling elements. Optionally, the spacer and/or panel elements of the second pole units may also act as second cooling elements. The second cooling elements may be connected to the second cooling system via a second set of thermal conductive elements, e.g. metal rods or wires, for conducting heat away from the second pole units. In this configuration, the second cooling units of the second cooling system may be cold heads configured to remove heat from the superconductive coils.

The respective pipe or hose system or set of thermal conductive elements connected to the first and/or second cooling system may be covered by one or more thermal insulating layers or another thermal shield for further reducing the heat transfer. The individual thermal conductive elements may be made of a material or alloy with good heat conductive properties, such as copper, silver, aluminium, magnesium, or another suitable material or alloys thereof. The respective pipe or hose system or set of thermal conductive elements connected to the first and/or second cooling system may be positioned at one or both ends of the thermal shield and/or the second pole unit.

The second cooling system may optionally comprise at least one second compressor unit in fluid communication with the second cooling units, e.g. cold heads, via a separate pipe or hose system. The second compressor unit may be configured to circulate a second working fluid through the second cooling units via a third line and a fourth line defined by this separate pipe or hose system. The second working fluid may in example be a suitable gas or liquid, such as helium or nitrogen. The second working fluid may be fed into the second cooling units via the third line, e.g. at or above an ambient temperature, and fed back to the second compressor unit via the fourth line. A controller may be connected to the individual components of the second cooling system via electrical cables for controlling the operation of the second cooling system. Alternatively, the first and third lines may be a common line and the second and fourth lines may be another common line. Likewise, the first and second compressor units may be a common compressor unit.

The first set of thermal conductive elements connected to the thermal shield may be arranged relative to the second set of thermal conductive elements connected to the superconductive coil arrangement. Optionally, one or more connecting elements may be arranged between the first thermal conductive elements and the superconductive coil arrangement. Optionally, one or more shielding elements may be connected to the second thermal conductive elements and the superconductive coil arrangement. The shielding elements may project outwards from respective thermal conductive elements and into the evacuated space. In example, two shielding elements may be connected to the second thermal conductive element so that they form an intermediate space within the first thermal conductive elements and, optionally, the connecting elements may be arranged. In example, the shielding elements may be made of the same material as the thermal conductive elements or a different material and/or have a thickness of a few millimetres, e.g. 1 mm or 2 mm. This also protects the first thermal conductive elements from heat radiating from the warmer components situated around the cold components.

According to one example, the rotary machine is configured as a generator.

The present rotary machine may be configured as a generator wherein the drive shaft is mounted to an external unit, e.g. a turbine unit, which drives the rotor. The stator coils may be electrically connected to a power converter for producing a power output. The use of HTS-coils means that this configuration is particularly suited for the field of wind energy or hydro power.

Alternatively, the present rotary machine may be configured as a motor wherein the drive shaft drives the external unit, e.g. a gear box unit of an electrical machine, a vehicle, a train, or a vessel.

The stator may also comprise a back iron having an inner surface facing the rotor, wherein the stator coils may be arranged on this inner surface. Alternatively, a plurality of slots may be formed in the inner surface so that the back iron forms a plurality of stator teeth. The stator coils may then be positioned in these slots and fixed relative to these stator teeth, e.g. using wedges. The stator coils may be copper based coils or superconductive coils in fluid communication with a suitable cooling system.

An object of the invention is also achieved by a wind turbine defined by claim 13 and comprising
- a nacelle arranged on a wind turbine tower;
- a rotatable hub arranged relative to the nacelle, which hub is connected to at least two wind turbine blades;
- a generator connected to the hub, where the generator comprises a rotor arranged rotatably relative to a stator, wherein
- the generator is a synchronous superconducting generator configured as mentioned above.

The use of HTS-coils in at least the rotor provides a compact and light weight generator which is particularly suited for applications in the field of wind energy. This saves space and weight and also manufacturing costs for wind turbines in the megawatt range compared to conventional copper based wind turbine generators.

### Description of the Drawing

The invention is described by example only and with reference to the drawings, wherein:
- Fig. 1: shows an example of a wind turbine;
- Fig. 2: shows an example of a rotary machine with a stator and a rotor according to the invention;
- Fig. 3: shows a cross-sectional view of the rotor seen in an axial direction;
- Fig. 4: shows an enlarged section of the cross-sectional view of fig. 3; and
- Fig. 5: shows a cross-sectional view of the rotor seen in a lateral direction.

In the following text, the figures will be described one by one, and the different parts and positions seen in the figures will be numbered with the same numbers in the different figures. Not all parts and positions indicated in a specific figure will necessarily be discussed together with that figure.

### Position number list

1. Wind turbine
2. Wind turbine tower
3. Foundation
4. Nacelle
5. Hub
6. Wind turbine blades
7. Generator
8. Stator
9. Rotor
10. Stator coils
11. Gap between stator and rotor
12. Rotor structure
13. Drive shaft
14. First cooling units, second cooling units
15. Connection points of first compressor unit and second compressor unit
16. First line, third line
17. Second line, fourth line
18. Back iron
19. Outer surface of back iron
20. First pole units
21. Second pole units
22. Outer surface of first pole unit
23. Rotor coils, superconductive coils
24. Chamber
25. Front wall of housing
26. Superconductive coil arrangement
27. Winding core element, core element
28. Spacer element
29. Plate shaped elements
30. Thermal shield, passively cooled
31. Thermal shield, actively cooled
32. Second space, magnetic air gap
33. First space, magnetic air gap
34. Support elements
35. Mounting point
36. Thermal conductive elements of first set
37. Shielding elements
38. Thermal conductive elements of second set
39. Connecting element
40. Connection point
41. End wall

### Detailed Description of the Invention

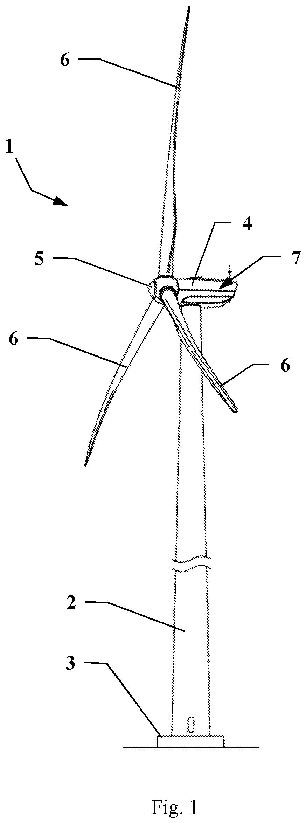

Fig. 1 shows an example of a wind turbine 1. The wind turbine 1 comprises a wind turbine tower 2 provided on a foundation 3. A nacelle 4 is arranged on top on the wind turbine tower 2 and configured to yaw relative to the wind turbine tower 2 via a yaw system (not shown). A hub 5 is rotatably arranged relative to the nacelle 4, wherein at least two wind turbine blades 6 are mounted to the hub 5 (here three wind turbine blades are shown).

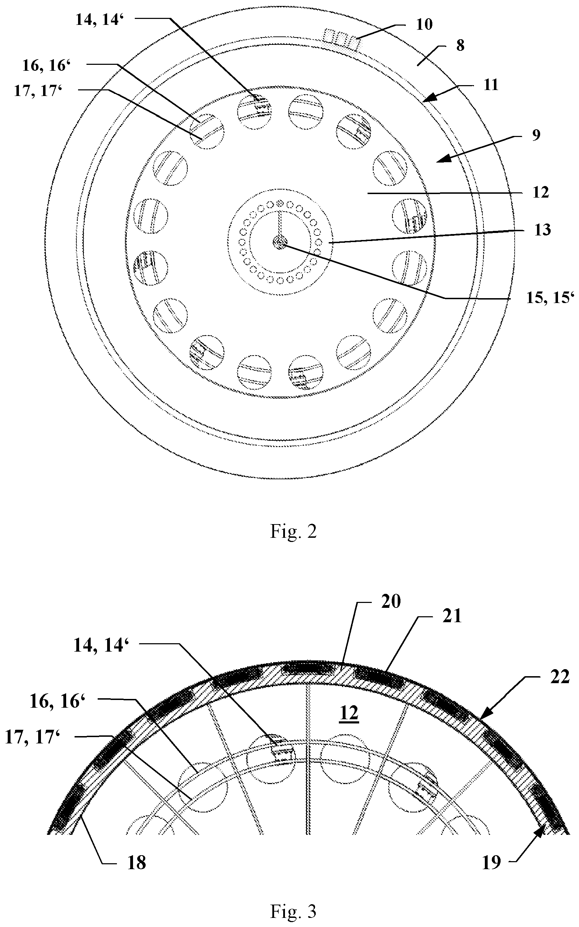

A rotary machine in the form of a generator 7 is arranged relative to the nacelle 4, here the generator is enclosed by a nacelle housing. The generator 7 is rotatably connected to the hub 5 via a drive shaft (shown in fig. 2) for producing a power output.

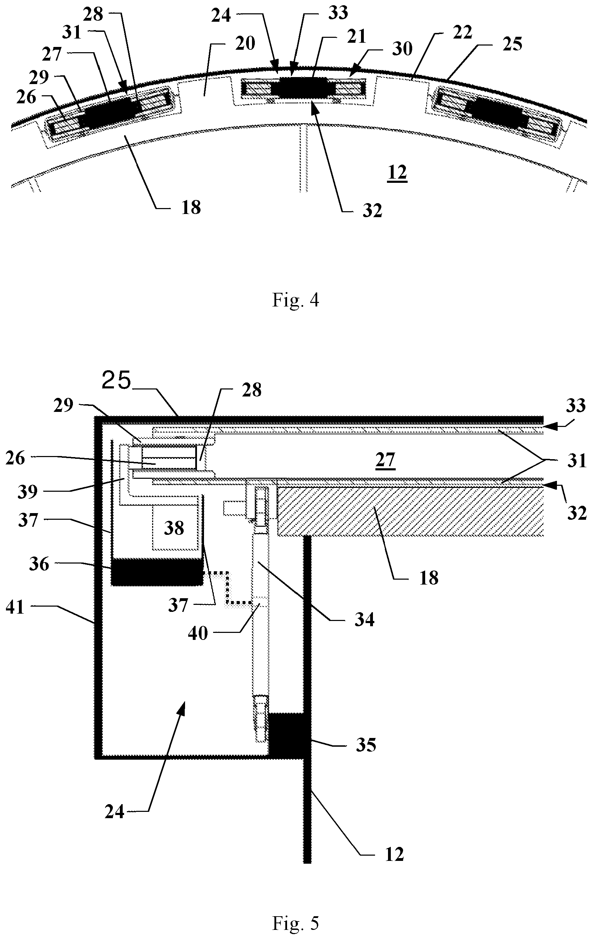

Fig. 2 shows an example of the rotary machine comprising a stator 8 and a rotor 9 arranged rotatably relative to the stator 8. The stator 8 comprises a back iron (not shown) having an inner surface facing the rotor 9. A plurality of pole units each having at least one stator coil 10 are positioned relative to this inner surface and configured to interact via an electromagnetic field with a plurality of rotor coils (shown in figs. 3 and 4) when the rotor 9 is rotated relative to the stator 8. A physical gap 11 is formed between the stator 8 and the rotor 9 to allow for rotation of the rotor 9.

The rotor 9 further comprises a back iron (shown in figs. 3 and 4) facing the stator 8 which in connected to a rotor structure 12. The rotor structure is further connected to a drive shaft 13 and enables torque to be transferred from the back iron to the drive shaft 13. The drive shaft 13 is rotatably connected to the hub 5, e.g. directly or via a gearbox unit (not shown).

A number of first cooling units 14 in the form of cold heads are arranged relative to the rotor 9 for removing heat from a thermal shield (shown in fig. 4) surrounding the exterior surfaces of a second pole unit (shown in figs. 3 and 4). The first cooling units 14 are connected to a first compressor unit 15, here only the connection point (e.g. a rotary feed-through) of the first compressor unit 15 is shown. The first compressor unit 15 is configured to circulate a first working fluid through the first cooling units 14 via a first line 16 and a second line 17. The first cooling units 14, first compressor unit 15, first line 16, and second line 17 form part of a first cooling system for actively cool down the thermal shield (shown in fig. 4) to an intermediate operating temperature.

In a similar manner, a number of second cooling units 14' in the form of cold heads are arranged relative to the rotor 9 for removing heat from the rotor coils (shown in fig. 4) of the second pole unit (shown in figs. 3 and 4). Here, a total of six of cooling units 14, 14' are shown. The second cooling units 14' are connected to a second compressor unit 15', here only the connection point (e.g. a rotary feed-through) of the second compressor unit 15' is shown. The second compressor unit 15' is configured to circulate a second working fluid through the second cooling units 14' via a third line 16' and a fourth line 17'. The second cooling units 14', the second compressor unit 15', the third line 16', and the fourth line 17' form part of a second cooling system for actively cool down the superconductive coils to a cryogenic operating temperature.

Fig. 3 shows the rotor 9 seen in an axial direction from one end of the rotor 9. The rotor structure 12 is connected to a back iron 18 which has an outer surface 19 facing the stator 8. The rotor 9 comprises a plurality of first pole units 20 and a plurality of second pole units 21 arranged relative to the outer surface 19 of the back iron 18. Each first pole unit 20 is configured as a pole element made of a magnetic material with no rotor coils (shown in fig. 4). The first pole unit 20 projects in a radial direction outwards from the outer surface 19 and has an outer surface 22 located at its free end. According to the invention a magnetic air gap is formed between opposite facing side surfaces of two adjacent first pole units 20 as indicated in fig. 3. Here, one second pole unit 21 is arranged within this gap. The econd pole unit 21 comprises at least one rotor coil 23 in form of a superconductive coil made of a high temperature superconductive material configured to operate at a cryogenic operating temperature of no more than 70 K.

Fig. 4 shows an enlarged section of the rotor 9 wherein an end wall (shown in fig. 5) is omitted for illustrative purposes. The rotor structure 12 is connected to a housing which forms an enclosed chamber 24 in which the first pole units 20 and the second pole units 21 are arranged. The chamber 24 can be connected to a vacuum system (not shown) configured to evacuate the chamber 24 so that it acts as a vacuum chamber. The end wall (shown in fig. 5) forms part of the housing and is connected to the rotor structure 12 at one end. A front wall 25 of the housing is positioned about the first and second pole units 20, 21 and is connected to the other end of the end wall (shown in fig. 5). The back iron 18 and, in part, the rotor structure 12 act as the back wall of the housing.

The second pole unit 21 comprises a superconductive coil arrangement 26 wherein a number of second cooling elements (not shown) are arranged relative to the superconductive coils. The second cooling elements are connected to the second cooling system via a second set of heat transferring elements for removing heat from the superconductive coils. The individual superconductive coils are wound around a winding core element 27 made of a magnetic material. At least one spacer element 28 is arranged between the superconductive coils and the winding core element. This spacer element 28 extends around the core element 27 and at least follows the shape of the individual superconductive coils. This allows for a higher operating current compared to other coil arrangements.

An optional plate shaped element 29 is arranged at the respective top and bottom ends of the superconductive coil arrangement 26. The spacer element 28 and/or the plate shaped element 29 is/are made of a non-magnetic material.

A passive thermal shield 30 is applied around the exterior surfaces of the second pole 21. The thermal shield 30 is a thermally insulating laminate comprising at least two layers made of a superinsulation material having good insulating properties. Alternatively, an actively cooled thermal shield 31 is applied around the exterior surfaces of the second pole unit 21. The thermal shield 31 is a laminate with at least one layer made of a heat insulating film and at least one first cooling element (not shown). The thermal shields 30, 31 act as thermal barriers and reduce the heat transfer between the warm back iron 18, the rotor structure 12, the housing, and the first pole units 20 and the cold second pole units 21.

The first cooling elements are connected to the first cooling system via a first set of heat transferring elements for removing heat from the thermal shield 31. The thermal shield 31 is spaced apart from the superconductive coil arrangement 26 by 5 mm or less.

Each of the second pole units 21 is spaced apart from the outer surface 19 of the back iron 18 and the first pole units 20 by at least one thermally insulating support element (shown in fig. 5) so that several spaces are formed. A first space 32 is located between the second pole unit 21 and the back iron 18. A second space 33 is located between the second pole unit 21 and the front wall 25. The first and second spaces 32, 33 contribute to the magnetic air gap of rotary machine. A third space is further located between the second pole unit 21 and either one of the adjacent first pole units 20 as shown in fig. 4.

Fig. 5 shows a cross-sectional view of one end of the rotor 9 seen in a lateral direction. Here, the second pole unit 21 is shown with the actively cooled thermal shield 31.

According to the invention at least one support element 34 extends in a radial direction and is at one end connected to the second pole unit 21. The support element 34 is at the other end connected to a mounting point 35, e.g. a reinforced element, on the rotor structure 12. At least one support element 34 (not shown) extends in a lateral direction and is at one end connected to the second pole unit 21. This support element 34 is at the other end connected to the first pole unit 20. The individual support elements 34 comprise at least one heat insulating element which acts as a thermal barrier between the warm end and the cold end. The heat insulating element preferably has a thermal conductivity below 40 W/_{m•K} and provide structural strength to the support element 34.

Here, the heat transferring elements connected to the first cooling system and the thermal shield 31 are configured as thermal conductive elements 36, only one is shown. The thermal conductive element 36 is connected two shielding elements 37 arranged on opposite sides which extend into the evacuated chamber 24 to form an intermediate space. Here, the heat transferring elements connected to the second cooling system and the second pole unit 21 are also configured as thermal conductive elements 38; only one is shown. The thermal conductive element 38 is arranged within this intermediate space so that the shielding elements 37 protect the second set of thermal conductive elements 38 from heat radiating from the warmer components situated around these cold components. An optional connecting element 39 is arranged between the thermal conductive element 38 and the second pole unit 21 so that the thermal conductive element 38 can be positioned in this intermediate space.

Another heat transferring element in the form of a thermal conductive element (indicated by dotted line) is connected to a selected thermal conductive element 36 and to a connection point 40 located on a selected support element 34. This allows heat introduced into the support element to be dissipated into the first cooling system.

The end wall 41 of the housing is here shown as a L-shaped wall connected to the front wall 15 and the rotor structure 12.

## Claims

1. A synchronous superconductive rotary machine comprising:
- a rotor (9) arranged rotatably relative to a stator (8), wherein
- the rotor (9) comprises at least a back iron (18) configured to be connected to a drive shaft (13) via a rotor structure (12), the rotor (9) further comprises a plurality of first pole units (20) arranged on the back iron (18), the first pole units (20) extend in at least a radial direction relative to the back iron (18), wherein a magnetic air gap is formed in circumferential direction between circumferential side surface of one of said first pole units (20) and a corresponding opposite circumferential side surface of an adjacent first pole unit (20) in which at least one second pole unit (21) is arranged, wherein the at least one second pole unit (21) comprises at least one superconductive rotor coil, the at least one rotor coil is configured to interact with at least one stator coil (10) arranged in the stator (8) via an electromagnetic field when the rotor (9) is rotated relative to the stator (8), wherein the first pole units (20) and the at least one second pole unit (21) are arranged inside an evacuated chamber (24) defined by a housing, wherein the first pole units (20) and the back iron (18) are configured to be operated at an ambient temperature, and wherein the at least one second pole unit (21) is configured to be operated at a cryogenic temperature, wherein the at least one second pole unit (21) is spaced apart from the back iron (18) by means of at least one thermally insulating support element (34) extended in radial direction of the rotor (9) and arranged at respective components of the rotor (9) and the rotor structure (12), so a first magnetic air gap (32) is formed between the at least one second pole unit (21) and the back iron (18) and at least a second magnetic air gap (33) is formed between the at least one second pole unit (21) and at least one front wall (25) of the housing of the evacuated chamber (24), wherein a radially outer end of the at least one thermally insulating support element (34) is mounted to a thermal shield (30,31) of the second pole unit (21) and a radially inner end of the at least one thermally insulating support element (34) is mounted to the rotor structure (12) between the back iron (18) and the drive shaft (13).

2. A synchronous superconductive rotary machine according to claim 1, **characterised in that** the first pole units (20) are shaped as magnetic pole elements projecting from an outer surface (19) of the back iron (18), wherein said magnetic pole elements have a radial height which at least corresponds to the thickness of the at least one second pole unit (21).

3. A synchronous superconductive rotary machine according to claim 1 or 2, **characterised in that** the at least one front wall (25) is facing the stator (8) and the housing further comprises at least one end wall (41) connected to the at least one front wall (25), wherein the at least one end wall (41) is further connected to at least one of the back iron (18) and the rotor structure (12).

4. A synchronous superconductive rotary machine according to any one of claims 1 to 3, **characterised in that** the at least one second pole unit (21) comprises the at least one thermal shield (31) surrounding the respective second pole unit (21), wherein the at least one thermal shield (31) is actively cooled by means of a first cooling system.

5. A synchronous superconductive rotary machine according to claim 4, **characterised in that** the first cooling system is connected to the at least one thermal shield (31) by means of a set of heat transferring elements configured to remove heat from the at least one thermal shield (31), wherein at least one of the heat transferring elements is further connected to said at least one thermally insulating support element (34) via another heat transferring element.

6. A synchronous superconductive rotary machine according to any one of claims 1 to 3, **characterised in that** the at least one second pole unit (21) comprises at least one thermal shield (30) surrounding the respective second pole unit (21), wherein the at least one thermal shield (30) is a passive thermal shield comprising at least one heat insulating layer.

7. A synchronous superconductive rotary machine according to any one of claims 1 to 6, **characterised in that** the superconductive coils are made of a high temperature superconductive material and configured to be operated at a cryogenic operating temperature of no more than 70 K.

8. A synchronous superconductive rotary machine according to claim 7, **characterised in that** the at least one second pole unit further comprises at least:
- at least one spacer element (28) arranged between a core element (27) and the superconductive coils.

9. A synchronous superconductive rotary machine according to claim 1, **characterised in that** the at least one thermally insulating support element (34) has a thermal conductivity below 40 W/_{m•K}.

10. A synchronous superconductive rotary machine according to claim 1 or 9, **characterised in that** the first magnetic air gap (32) has a radial height of 1 mm to 30 mm and/or the at least second magnetic air gap (33) has a radial height of 15 mm to 50 mm.

11. A synchronous superconductive rotary machine according to any one of claims 1 to 10, **characterised in that** the at least one second pole unit (21) is further connected to a second cooling system configured to cool the superconductive coils to the cryogenic operating temperature.

12. A synchronous superconductive rotary machine according to any one of claims 1 to 11, **characterised in that** the rotary machine is configured as a generator (7).

13. A wind turbine (1) comprising:
- a nacelle (4) arranged on a wind turbine tower (2);
- a rotatable hub (5) arranged relative to the nacelle (4), which hub (5) is connected to at least two wind turbine blades (6);
- a generator (7) connected to the hub (5), where the generator (7) comprises a rotor (9) arranged rotatably relative to a stator (8), wherein
- the generator (7) is a synchronous superconducting machine configured according to any one of claims 1 to 12.

## Patentansprüche

1. Synchrone supraleitende Drehmaschine, umfassend:
- einen Rotor (9), welcher bezogen auf einen Stator (8) drehbar angeordnet ist, wobei
- der Rotor (9) mindestens einen magnetischen Rückschluss (18) umfasst, welcher dazu konfiguriert ist, über eine Rotorstruktur (12) mit einer Antriebswelle (13) verbunden zu sein, wobei der Rotor (9) ferner eine Vielzahl von ersten Pfosteneinheiten (20) umfasst, welche auf dem magnetischer Rückschluss (18) angeordnet sind, wobei sich die ersten Pfosteneinheiten (20) in mindestens eine radiale Richtung bezogen auf den magnetischen Rückschluss (18) erstrecken, wobei ein magnetischer Luftspalt in Umfangsrichtung zwischen einer Umfangsseitenfläche von einer der ersten Pfosteneinheiten (20) und einer entsprechenden gegenüberliegenden Umfangsseitenfläche einer benachbarten ersten Pfosteneinheit (20) gebildet wird, in welcher mindestens eine zweite Pfosteneinheit (21) angeordnet ist, wobei die mindestens eine zweite Pfosteneinheit (21) mindestens eine supraleitende Rotorspule umfasst, wobei die mindestens eine Rotorspule dazu konfiguriert ist, mit mindestens einer Statorspule (10) zu interagieren, welche über ein elektromagnetisches Feld in dem Stator (8) angeordnet ist, wenn der Rotor (9) bezogen auf den Stator (8) gedreht wird, wobei die ersten Pfosteneinheiten (20) und die mindestens eine zweite Pfosteneinheit (21) in einer entleerten Kammer (24) angeordnet sind, welche durch ein Gehäuse definiert ist, wobei die ersten Pfosteneinheiten (20) und der magnetische Rückschluss (18) dazu konfiguriert sind, bei einer Umgebungstemperatur betrieben zu werden, und wobei die mindestens eine zweite Pfosteneinheit (21) dazu konfiguriert ist, bei einer kryogenen Temperatur betrieben zu werden, wobei die mindestens eine zweite Pfosteneinheit (21) durch mindestens ein thermisch isolierendes Stützelement (34), welches sich in radialer Richtung von dem Rotor (9) erstreckt und an den jeweiligen Komponenten des Rotors (9) und der Rotorstruktur (12) angeordnet ist, von dem magnetischen Rückschluss (18) beabstandet ist, so dass ein erster magnetische Luftspalt (32) zwischen der mindestens einen zweiten Pfosteneinheit (21) und dem magnetischen Rückschluss (18) gebildet wird und mindestens ein zweiter magnetischer Luftspalt (33) zwischen der mindestens einen zweiten Pfosteneinheit (21) und mindestens einer Vorderwand (25) des Gehäuses der entleerten Kammer (24) gebildet wird, wobei ein radial äußeres Ende des mindestens einen thermisch isolierenden Stützelements (34) an ein thermisches Schild (30, 31) der zweiten Pfosteneinheit (21) angebracht ist und wobei ein radial inneres Ende des mindestens einen thermisch isolierenden Stützelements (34) an der Rotorstruktur (12) zwischen dem magnetischen Rückschluss (18) und der Antriebswelle (13) angebracht ist.

2. Synchrone supraleitende Drehmaschine nach Anspruch 1, **dadurch gekennzeichnet, dass** die ersten Pfosteneinheiten (20) als magnetische Pfostenelemente geformt sind, welche von einer äußeren Fläche (19) des magnetischen Rückschlusses (18) vorstehen, wobei die magnetischen Pfostenelemente eine radiale Höhe aufweisen, welche mindestens der Dicke der mindestens einen zweiten Pfosteneinheit (21) entspricht.

3. Synchrone supraleitende Drehmaschine nach Anspruch 1 oder 2, **dadurch gekennzeichnet, dass** die mindestens eine Vorderwand (25) in Richtung des Stators (8) zeigt und dass das Gehäuse ferner mindestens eine Endwand (41) umfasst, welche mit der mindestens einen Vorderwand (25) verbunden ist, wobei die mindestens eine Endwand (41) ferner mit dem mindestens einen des magnetischen Rückschlusses (18) und der Rotorstruktur (12) verbunden ist.

4. Synchrone supraleitende Drehmaschine nach einem der Ansprüche 1 bis 3, **dadurch gekennzeichnet, dass** die mindestens eine zweite Pfosteneinheit (21) das mindestens eine thermische Schild (31) umfasst, welches die jeweilige zweite Pfosteneinheit (21) umgibt, wobei das mindestens eine thermische Schild (31) durch ein erstes Kühlsystem aktiv gekühlt wird.

5. Synchrone supraleitende Drehmaschine nach Anspruch 4, **dadurch gekennzeichnet, dass** das erste Kühlsystem durch einen Satz von Wärmeübertragungselementen, welche dazu konfiguriert sind, Wärme von dem mindestens einen thermischen Schild (31) zu entfernen, mit dem mindestens einen thermischen Schild (31) verbunden ist, wobei mindestens eines der Wärmeübertragungselemente über ein weiteres Wärmeübertragungselement ferner mit dem mindestens einen thermisch isolierenden Stützelement (34) verbunden ist.

6. Synchrone supraleitende Drehmaschine nach einem der Ansprüche 1 bis 3, **dadurch gekennzeichnet, dass** die mindestens eine zweite Pfosteneinheit (21) mindestens ein thermisches Schild (30) umfasst, welches die jeweilige zweite Pfosteneinheit (21) umgibt, wobei das mindestens eine thermische Schild (30) ein passives thermisches Schild ist, welches mindestens eine wärmeisolierende Schicht umfasst.

7. Synchrone supraleitende Drehmaschine nach einem der Ansprüche 1 bis 6, **dadurch gekennzeichnet, dass** die supraleitenden Spulen aus supraleitendem Hochtemperaturmaterial gefertigt sind und dazu konfiguriert sind, bei einer kryogenen Betriebstemperatur von nicht mehr als 70 K betrieben zu werden.

8. Synchrone supraleitende Drehmaschine nach Anspruch 7, **dadurch gekennzeichnet, dass** die mindestens eine zweite Pfosteneinheit ferner mindestens Folgendes umfasst:
- Mindestens ein Abstandselement (28), welches zwischen einem Kernelement (27) und den supraleitenden Spulen (28) angeordnet ist.

9. Synchrone supraleitende Drehmaschine nach Anspruch 1, **dadurch gekennzeichnet, dass** das mindestens eine thermisch isolierende Stützelement (34) eine thermische Leitfähigkeit unter 40 W/_{m•K} aufweist.

10. Synchrone supraleitende Drehmaschine nach einem der Ansprüche 1 bis 9, **dadurch gekennzeichnet, dass** der erste magnetische Luftspalt (32) eine radiale Höhe von 1 mm bis 30 mm aufweist und/oder der mindestens zweite magnetische Luftspalt (33) eine radiale Höhe von 15 mm bis 50 mm aufweist.

11. Synchrone supraleitende Drehmaschine nach einem der Ansprüche 1 bis 10, **dadurch gekennzeichnet, dass** die mindestens eine zweite Pfosteneinheit (21) ferner mit einem zweiten Kühlsystem verbunden ist, welches dazu konfiguriert ist, die supraleitenden Spulen auf eine kryogene Betriebstemperatur zu kühlen.

12. Synchrone supraleitende Drehmaschine nach einem der Ansprüche 1 bis 11, **dadurch gekennzeichnet, dass** die Drehmaschine als ein Generator (7) konfiguriert ist.

13. Windturbine (1), umfassend:
- eine Gondel (4), welche auf einem Windturbinenturm (2) angeordnet ist;
- eine drehbare Nabe (5), welche bezogen auf die Gondel (4) angeordnet ist, wobei die Nabe (5) mit mindestens zwei Windturbinenschaufeln (6) verbunden ist;
- einen Generator (7), welcher mit der Nabe (5) verbunden ist, wobei der Generator (7) einen Rotor (9) umfasst, welcher drehbar bezogen auf einen Stator (8) angeordnet ist, wobei
- der Generator (7) eine synchrone supraleitende Maschine ist, welche nach einem der Ansprüche 1 bis 12 konfiguriert ist.

## Revendications

1. Machine tournante supraconductrice synchrone comprenant :
- un rotor (9) agencé de manière rotative par rapport à un stator (8), dans laquelle
- le rotor (9) comprend au moins un fer arrière (18) conçu pour être relié à un arbre d'entraînement (13) via une structure de rotor (12), le rotor (9) comprend en outre une pluralité de premières unités de pôles (20) agencées sur le fer arrière (18), les premières unités de pôles (20) se prolongent dans au moins une direction radiale par rapport au fer arrière (18), dans laquelle un entrefer magnétique est formé dans une direction circonférentielle entre une surface latérale circonférentielle de l'une desdites premières unités de pôles (20) et une surface latérale circonférentielle opposée correspondante d'une première unité de pôle (20) adjacente dans laquelle au moins une seconde unité de pôle (21) est agencée, dans laquelle l'au moins une seconde unité de pôle (21) comprend au moins une bobine de rotor supraconductrice, l'au moins une bobine de rotor est conçue pour interagir avec au moins une bobine de stator (10) agencée dans le stator (8) via un champ électromagnétique lorsque le rotor (9) tourne par rapport au stator (8), dans laquelle les premières unités de pôles (20) et l'au moins une seconde unité de pôle (21) sont agencées à l'intérieur d'une chambre sous vide (24) définie par un boîtier, dans laquelle les premières unités de pôles (20) et le fer arrière (18) sont conçus pour fonctionner à une température ambiante, et dans laquelle l'au moins une seconde unité de pôle (21) est conçue pour fonctionner à une température cryogénique, dans laquelle l'au moins une seconde unité de pôle (21) est espacée du fer arrière (18) au moyen d'au moins un élément de support isolant thermiquement (34) se prolongeant dans une direction radiale du rotor (9) et agencé au niveau de composants respectifs du rotor (9) et de la structure de rotor (12), ce qui fait qu'un premier entrefer magnétique (32) est formé entre l'au moins une seconde unité de pôle (21) et le fer arrière (18) et au moins un second entrefer magnétique (33) est formé entre l'au moins une seconde unité de pôle (21) et au moins une paroi avant (25) du boîtier de la chambre sous vide (24), dans laquelle une extrémité radialement extérieure de l'au moins un élément de support isolant thermiquement (34) est montée sur un écran thermique (30, 31) de la seconde unité de pôle (21) et une extrémité radialement intérieure de l'au moins un élément de support isolant thermiquement (34) est montée sur la structure de rotor (12) entre le fer arrière (18) et l'arbre d'entraînement (13).

2. Machine tournante supraconductrice synchrone selon la revendication 1, **caractérisée en ce que** les premières unités de pôles (20) sont formées comme des éléments de pôle magnétique faisant saillie à partir d'une surface extérieure (19) du fer arrière (18), dans laquelle lesdits éléments de pôle magnétique ont une hauteur radiale qui correspond au moins à l'épaisseur de l'au moins une seconde unité de pôle (21).

3. Machine tournante supraconductrice synchrone selon la revendication 1 ou 2, **caractérisée en ce que** l'au moins une paroi avant (25) fait face au stator (8) et le boîtier comprend en outre au moins une paroi d'extrémité (41) reliée à l'au moins une paroi avant (25), dans laquelle l'au moins une paroi d'extrémité (41) est en outre reliée à au moins l'un du fer arrière (18) et de la structure de rotor (12).

4. Machine tournante supraconductrice synchrone selon l'une quelconque des revendications 1 à 3, **caractérisée en ce que** l'au moins une seconde unité de pôle (21) comprend l'au moins un écran thermique (31) entourant la seconde unité de pôle (21) respective, dans laquelle l'au moins un écran thermique (31) est refroidi activement au moyen d'un premier système de refroidissement.

5. Machine tournante supraconductrice synchrone selon la revendication 4, **caractérisée en ce que** le premier système de refroidissement est relié à l'au moins un écran thermique (31) au moyen d'un ensemble d'éléments de transfert de chaleur conçus pour retirer de la chaleur de l'au moins un écran thermique (31), dans laquelle au moins l'un des éléments de transfert de chaleur est en outre relié audit au moins un élément de support isolant thermiquement (34) via un autre élément de transfert de chaleur.

6. Machine tournante supraconductrice synchrone selon l'une quelconque des revendications 1 à 3, **caractérisée en ce que** l'au moins une seconde unité de pôle (21) comprend au moins un écran thermique (30) entourant la seconde unité de pôle (21) respective, dans laquelle l'au moins un écran thermique (30) est un écran thermique passif comprenant au moins une couche isolant de la chaleur.

7. Machine tournante supraconductrice synchrone selon l'une quelconque des revendications 1 à 6, **caractérisée en ce que** les bobines supraconductrices sont constituées d'un matériau supraconducteur à haute température et conçues pour fonctionner à une température de fonctionnement cryogénique de pas plus de 70 K.

8. Machine tournante supraconductrice synchrone selon la revendication 7, **caractérisée en ce que** l'au moins une seconde unité de pôle comprend en outre au moins :
- au moins un élément d'espacement (28) agencé entre un élément central (27) et les bobines supraconductrices.

9. Machine tournante supraconductrice synchrone selon la revendication 1, **caractérisée en ce que** l'au moins un élément de support isolant thermiquement (34) a une conductivité thermique en dessous de 40 W/_{m•K}.

10. Machine tournante supraconductrice synchrone selon la revendication 1 ou 9, **caractérisée en ce que** le premier entrefer magnétique (32) a une hauteur radiale de 1 mm à 30 mm et/ou l'au moins un second entrefer magnétique (33) a une hauteur radiale de 15 mm à 50 mm.

11. Machine tournante supraconductrice synchrone selon l'une quelconque des revendications 1 à 10, **caractérisée en ce que** l'au moins une seconde unité de pôle (21) est en outre reliée à un second système de refroidissement conçu pour refroidir les bobines supraconductrices jusqu'à la température de fonctionnement cryogénique.

12. Machine tournante supraconductrice synchrone selon l'une quelconque des revendications 1 à 11, **caractérisée en ce que** la machine tournante et conçue comme un générateur (7).

13. Éolienne (1) comprenant :
- une nacelle (4) agencée sur une tour éolienne (2) ;
- un moyeu (5) rotatif agencé par rapport à la nacelle (4), lequel moyeu (5) est relié à au moins deux pales d'éolienne (6) ;
- un générateur (7) relié au moyeu (5), où le générateur (7) comprend un rotor (9) agencé de manière rotative par rapport à un stator (8), dans laquelle
- le générateur (7) est une machine supraconductrice synchrone conçue selon l'une quelconque des revendications 1 à 12.
